# EUROPÄISCHE PATENTSCHRIFT

(11) **EP 2 668 129 B1**
(45) Veröffentlichungstag und Bekanntmachung des Hinweises auf die Patenterteilung: **25.11.2015**
(21) Anmeldenummer: 12701981.8
(22) Anmeldetag: 24.01.2012
(51) Int. Cl.: B66D 1/36, B66D 1/30

(54) **SEILTROMMEL UND SEILROLLE FÜR FASERSEILTRIEBE**
ROPE DRUM AND ROPE ROLLER FOR FIBRE-ROPE DRIVES
TAMBOUR À CÂBLE ET POULIE POUR MÉCANISMES À CÂBLES EN FIBRES

(30) Priorität: 24.01.2011 DE 202011001845 U
(43) Veröffentlichungstag der Anmeldung: 04.12.2013
(73) Patentinhaber: Liebherr-Components Biberach GmbH, 88400 Biberach/Riß (DE)
(72) Erfinder: ILAKA, Mupende, 89231 Neu-Ulm (DE); ZERZA, Horst, 88400 Biberach (DE)
(74) Vertreter: Thoma, Michael
(86) Internationale Anmeldenummer: PCT/EP2012/000312
(87) Internationale Veröffentlichungsnummer: WO 2012/100939

(56) Entgegenhaltungen:
- WO-A1-2008/040349
- DD-A1- 127 206

## Beschreibung

Die vorliegende Erfindung betrifft allgemein mit hochfesten Faserseilen arbeitende Seiltriebe wie beispielsweise Kranhubwerke, Auslegerverstellwerke, Katzfahrwerke usw. Die Erfindung betrifft dabei insbesondere die Seiltrommel für die Seilwinde eines solchen Faserseiltriebs, mit einem Trommelmantelkörper, der umfangsseitig mit einer Rillung versehen ist, sowie zwei endseitig an den Trommelmantelkorpus angrenzenden Bordscheiben. Die Erfindung betrifft weiterhin eine Seilrolle für einen solchen Faserseiltrieb, mit einem drehbar gelagerten Rollenkorpus, dessen Mantelfläche zumindest eine Seilrille aufweist.

Seit geraumer Zeit wird insbesondere bei Kranen versucht, die üblichen, schweren Stahlseile durch hochfeste Faserseile zu ersetzen, die aus hochfesten Kunstfasern wie beispielsweise Aramidfasern (HMPA), Aramid-/Kohlefasergemischen, hochmodulare Polyethylen-Fasern HMPE, oder Poly(p-phenylene-2,6-benzobisoxazole)-Fasern PBO bestehen oder zumindest derartige Fasern aufweisen. Durch die Gewichtsersparnis gegenüber Stahlseilen kann die Traglast bzw. die zulässige Hublast erhöht werden, da das für die Traglast zu berücksichtigende Eigengewicht des Seils geringer ist. Gerade bei Kranen mit großen Hubhöhen, oder Ausleger, oder Mastverstellwerke mit Flaschenzügen hoher Einscherungszahl kommen beträchtliche Seillängen und damit auch ein entsprechendes Seilgewicht zustande, so dass die durch hochfeste Faserseile mögliche Gewichtsreduzierung sehr vorteilhaft ist.

Problematisch ist bei derartigen hochfesten Faserseilen bislang jedoch die Verschleißanfälligkeit und die sichere Erkennung der Ablegereife. Bei gleichem Seildurchmesser haben Stahlseile und hochfeste Faserseile aus Kunststofffasern nahezu die gleiche Zugfestigkeit, jedoch weisen die Stahldrähte eine bedeutend höhere Härte als die Fasern der hochfesten Faserseile auf. Hieraus resultiert eine geringere Querdrucksteifigkeit der hochfesten Faserseile, die wesentlich weicher und dadurch nicht so widerstandsfähig gegen Abrieb wie Stahlseile sind, wenn das Seil auf eine Trommel gewickelt wird oder über Seilrollen läuft, was zu deutlich höherem Verschleiß an den hochfesten Faserseilen führen kann.

Besonders verschleißanfällig ist hierbei der Bereich, in dem das Hubseil in einer oder mehreren Lagen auf die Seiltrommel aufgewickelt bzw. von dieser abgewickelt wird, sowie der Bereich, in dem das Seil um eine Seilrolle läuft. Wird das Seil unter Belastung in der ersten Lage auf den Trommelmantelkorpus der Seiltrommel aufgespult, so ergibt sich durch die Dehnung des Seiles eine Relativbewegung zwischen Trommelrille und Seil. Ein ähnliches Verhalten ergibt sich bei mehrlagiger Wicklung, wobei hier dann Seil auf Seil gleitet, was ebenfalls zu Reibung und Verschleiß führt. Ein weiterer Verschleißbereich ist der Seillagenwechsel, wenn das Seil durch die Trommelbordscheiben umgelenkt wird.

Um den Reibungsverschleiß zu reduzieren, werden Stahlseile in der Regel bereits bei der Verseilung gefettet, wobei auch im Betrieb eine regelmäßig Nachfettung notwendig ist. Durch diese Fettung erhält man einen kleinen Reibwert und somit geringen Verschleiß bei der Wicklung der Seile, speziell die Reibung des Seils zum Trommelkörper, die Reibung Seil auf Seil und die Reibung beim Anlaufen auf die Bordscheibe oder bei Anlaufen an die Seilabweiser wird reduziert. Gleiches gilt auch für Seilrollen. Ein gefettetes Gleiten von Stahl auf Stahl hat somit den großen Vorteil von kleinem Reibbeiwert und hierdurch geringen Verschleiß. Dieser Vorteil der Fettung kann beim Einsatz von Faserseilen aus Kunststofffasern in Verbindung mit Seiltrommeln und Seilrollen nicht genützt werden.

Bei der an Kranen am häufigsten zum Einsatz kommenden Seiltrommelbauart für Mehrlagenwickelung ist der Trommelmantelkorpus mit einer Spezialverrillung ausgeführt, die ein sauberes Wickeln in mehreren Lagen zulässt. Die Verrillung besitzt hierbei auf den Trommelumfang gesehen zwei gegenüberliegende Steigungsbereiche mit einem Erstreckungsbereich von ca. je 90° sowie zwei ebenfalls gegenüberliegende Parallelbereiche mit ebenfalls einer Erstreckung von jeweils etwa 90°. Jeder der Steigungsbereiche sieht dabei einen Rillenversatz von etwa einem halben Seildurchmesser vor.

Herkömmliche Seiltrommeln der genannten Art sind beispielsweise aus der Schrift WO 2008/040349 A1 oder der Schrift DE 101 32 611 A1 bekannt, bei der die zwischen den Parallelbereichen vorgesehenen Steigungsbereiche sich überkreuzende Rillen besitzen, um ein Aufwickeln des Seiles sowohl im Uhrzeigersinn als auch entgegen dem Uhrzeigersinn zu ermöglichen. Die DD 127206 zeigt eine berillte Seiltrommel, deren Rillung einen ebenen Boden aufweist, um auch bei Belastung eine nur punktförmige Seilberührung zu erzielen. Ferner ist aus der DE 10 2005 004 816 A1 eine Seiltrommel bekannt, bei der nur der Parallelbereich tatsächlich mit einer Berillung versehen ist, während der Steigungsbereich ohne Rillen ausgebildet ist, so dass dort die sich schräg versetzenden Seilabschnitte auf einer glatten, unberillten Manteloberfläche aufliegen. Ferner beschreibt die DE 20 2008 011 359 U1 eine Seiltrommel für ein Kranhubwerk, wobei der Seiltrommel im Einlaufbereich des Seils eine Einlaufführung zugeordnet ist, die aus zwei gegenüberliegenden Walzen unter Freilassung eines Spaltes gebildet wird, dessen Spaltbreite weitgehend dem Seildurchmesser entspricht. Die genannten Seilführung kann quer, d.h. parallel zur Drehachse der Seiltrommel verfahren werden, um die gewünschte Wickelqualität sicherzustellen. Die zuvor angesprochene Problematik des erhöhten Seilverschleißes bei Verwendung von hochfesten Faserseilen bleibt bei diesen vorbekannten Seiltrommeln jedoch ungelöst.

Der vorliegenden Erfindung liegt die Aufgabe zugrunde, einen verbesserten Faserseiltrieb, eine verbesserte Seiltrommel für einen solchen Faserseiltrieb und/oder eine verbesserte Seilrolle für einen solchen Faserseiltrieb zu schaffen, die Nachteile des Standes der Technik vermeiden und Letzteren in vorteilhafter Weise weiterbilden. Insbesondere soll der Verschleiß an hochfesten Faserseilen verringert werden, ohne die Wickelqualität zu beeinträchtigen.

Erfindungsgemäß wird diese Aufgabe durch eine Seiltrommel nach Anspruch 1, eine Seilrolle nach Anspruch 13 sowie einen Faserseiltrieb nach Anspruch 15 gelöst. Bevorzugte Ausgestaltungen der Erfindung sind Gegenstand der abhängigen Ansprüche.

Es wird also vorgeschlagen, die an hochfesten Faserseilen unter Querbelastung auftretenden Querschnittsveränderung zuzulassen und die Rillung der Seiltrommel und/oder der Seilrolle hieran anzupassen, sowie gar nicht erst zu versuchen, das Seil durch Abstützung in seinem idealtypisch kreisrunden Querschnitt zu halten. Erfindungsgemäß besitzen die Seilrillen im Querschnitt betrachtet eine von der Kreisform abweichende, flachgedrückte runde Rillenkontur, die im Bereich des Rillenbodens einen größeren Krümmungsradius als im Bereich der daran angrenzenden Rillenflanken besitzt. Hierbei wird der bislang übliche Weg verlassen, das vor Auflaufen auf die Trommel im Querschnitt kreisrunde Seil durch kreisförmig konturierte Rillen auf der Seiltrommel abstützen, sondern vielmehr von der Überlegung ausgegangen, dass ein Faserseil nach Auflaufen auf die Seiltrommel nicht mehr nur unter Zug steht, sondern auch durch Querkräfte beaufschlagt wird, und sich infolgedessen eine Ovalisierung des Seilquerschnitts einstellt. Die Seilrillung ist nicht mehr länger an den idealen, typischerweise kreisrunden Seilquerschnitt unter reiner Zugbelastung, sondern an den tatsächlichen Seilquerschnitt unter Zug- und Querbelastung auf der Seiltrommel angepasst. Hierdurch kann eine gleichmäßigere, besser verteilte Druckbelastung erreicht werden, die den Verschleiß des Faserseils reduzieren kann.

In vorteilhafter Weiterbildung der Erfindung kann die abgeflachte Rillenkontur näherungsweise oval bzw. ovalisiert oder auch elliptisch geformt sein, wenn die Rillenkontur im Querschnitt betrachtet wird. Vorteilhafterweise sind auch die Übergangsbereiche zwischen zwei benachbarten Rillen mit möglichst großem Radius abgerundet, so dass auch bei leicht zur Rille versetztem Auflaufen des Seils kein kantiges Drücken auf den Seilquerschnitt auftritt. Alternativ zu der genannten ovalen Konturierung der Seilrillen kann auch eine Rillenkontur vorgesehen sein, die am Rillenboden eine Abflachung besitzt und/oder im Querschnitt betrachtet polygonartige Abknickungen besitzt, deren näherungsweise flach ausgebildeten Flächensegmente flachwinklig zueinander angestellt sind und vorzugsweise abgerundet ineinander übergehen. Die Flächensegmente einschließlich der Abflachungen sind aber auch hier vorteilhafterweise derart angeordnet, dass eine daran angeschmiegte Hüllfläche in der vorgenannten Weise im Bereich des Rillenbodens einen größeren Krümmungsradius als im Bereich der daran angrenzenden Rillenflanken und/ oder einen größeren Krümmungsradius als das Seil in unverformtem, kreisrundem Ausgangszustand besitzt.

Die Stärke der Abflachung bzw. Flachdrückung der Rillenkontur kann an die jeweilige Ausbildung und den Aufbau des Faserseils und dessen Querverformung angepasst werden. Ein guter Kompromiss für verschiedenartige Faserseile besteht in Weiterbildung der Erfindung darin, dass das Verhältnis von Rillenbreite zu Rillentiefe im Bereich von 3-7, vorzugsweise 4-6 und insbesondere etwa 5 gewählt wird, d.h. bei einer beispielsweise vorgesehenen Rillenbreite von 10 mm würde die Rillentiefe 2 mm betragen. Als Rillentiefe ist hierbei der Abstand des tiefsten Punktes einer Rille von einer gedachten Verbindungsgeraden, die die beiden Flankenspitzen verbindet, zu verstehen.

Alternativ oder zusätzlich kann die Rillenkonturierung derart getroffen sein, dass der Teilungsabstand der Rillung, d.h. der Abstand der Mitten zweier benachbarter Rillen voneinander, etwa 104 % bis 111 %, vorzugsweise etwa 106% bis 110 %, besonders bevorzugt 108% des mittleren Seildurchmessers, wenn dieser bei kreisrundem, unverformtem Seilquerschnitt gemessen wird, beträgt. Vorteilhafterweise wird der genannte Rillenabstand bzw. Teilungsabstand der Rillung an die sich einstellende Ovalisierung des Faserseilquerschnitts angepasst.

Um den beim Aufspulen auf die Seiltrommel am Seil auftretenden Reibungsverschleiß, der durch die Reibung zwischen Trommeloberfläche und Seiloberfläche infolge der Seildehnung eintritt, zu minimieren, wird die Rillung und/oder die das Seil berührenden Teile der Seiltrommel vorteilhafterweise mit einer reibungsarmen, vorzugsweise näherungsweise reibungsfreien Oberfläche versehen, so dass das Seil verschleißfrei an der Rillungsoberfläche bzw. Bordscheibenoberfläche entlang gleiten kann. Eine solche reibungsarme Oberfläche kann entweder durch eine Feinstbearbeitung der Oberfläche beispielsweise durch Polieren oder Schleifen und/oder durch eine entsprechende Oberflächenbeschichtung erreicht werden. Eine solche reibungsreduzierende Ausbildung der seilberührenden Trommeloberflächen bringt grundsätzlich auch ohne die vorgenannte ovalisierte Rillenkontur beträchtliche Vorteile mit sich, kann insbesondere aber auch gerade in Verbindung mit der genannten ovalisierten Rillenkontur Verwendung finden. Vorteilhafterweise sind die seilberührenden Oberflächen der Seiltrommel, insbesondere die Rillung und die Bordscheibe im Bereich des daran vorgesehenen Abweisers derart fein bearbeitet und/oder oberflächenbeschichtet, dass die mittlere Rautiefe Ra weniger als 1 µm, vorzugsweise weniger als 0,35 µm beträgt, insbesondere etwa 0,15 µm bis 0,18 µm.

Wird in der vorgenannten Weise die seilberührende Trommeloberfläche mit einer reibungsreduzierenden Oberflächenbeschichtung versehen, kann insbesondere eine Kunststoffbeschichtung Verwendung finden. Vorteilhafterweise ist die Oberflächenbeschichtung nicht nur reibungsreduzierend, sondern auch dämpfend ausgebildet, um Spitzen in der Flächenpressung und/oder Stöße auf das auflaufende Seil zu reduzieren.

In vorteilhafter Weiterbildung der Erfindung kann die Oberflächenbeschichtung mehrlagig ausgebildet sein, wobei vorteilhafterweise eine oberste Beschichtungslage reibungsreduzierend ausgebildet ist, während zumindest eine mittelbar oder unmittelbar darunter liegende Beschichtungslage dämpfend ausgebildet ist.

Beispielsweise kann auf einen aus Stahl gefertigten Trommelmantelkorpus eine Kunststoffummantelung beispielsweise aufvulkanisiert werden, um einen gedämpften Seillauf und geringen Reibwert zum Seil zu erzeugen. Alternativ oder zusätzlich sind auch Verbundausführungen des Trommelkorpus möglich, beispielsweise aus faserverstärkten Verbundwerkstoffen wie GFK und CFK, die ggf. auch mit Stahlblechlagen kombiniert sein können, wobei optional auf eine solche Verbundtrommel auch Kunststoffummantelungen der vorgenannten Art aufgebracht sein können. Alternativ können auch reine Kunststofftrommeln Verwendung finden, z.B. aus faserverstärktem Kunststoff wie GFK oder CFK.

Die Berillung des Trommelmantelkorpus kann grundsätzlich verschieden ausgebildet sein. Beispielsweise könnte eine an sich herkömmliche Verrillung vorgesehen sein, die auf den Trommelumfang gesehen zwei gegenüberliegende Kreuzungs- bzw. Steigungsbereiche und zwei gegenüberliegende Parallelbereiche besitzt, wobei die genannten Steigungsbereiche und Parallelbereiche mit jeweils einem ca. 90°-Winkel ausgebildet sein können, d.h. sich über je ca. 90° des Trommelumfangs erstrecken können. Hierbei ändert sich in jedem Steigungsbereich die Rillensteigung um etwa einen halben Seildurchmesser, wobei hier bei ovalisierter Rillenkontur der flachgedrückte, ovalisierte Seildurchmesser zugrunde zu legen wäre.

In vorteilhafter Weiterbildung der Erfindung jedoch kann eine Berillung mit nur einem Steigungsbereich und nur einem Parallelbereich vorgesehen werden, wobei in dem genannten einen Steigungsbereich sich die Rillen um etwa einen vollen Seildurchmesser versetzen, wobei auch hier vorteilhafterweise wiederum der vergrößerte, ovalisierte Seildurchmesser zugrunde zu legen ist. Hierdurch ergibt sich auf den Trommelumfang gesehen nur ein Kreuzungsbereich. Dies ermöglicht eine kostengünstige, gute mehrlagige Seilspulung mit hoher Wickelqualität und geringem Seilverschleiß.

Um den Verschleiß des Seils beim Umlenken an den Bordscheiben in die nächste Lage zu reduzieren, kann an zumindest einer der Bordscheiben ein Seilabweiser vorgesehen sein, der einen vorzugsweise mehrstufigen Abweiserverlauf besitzt.

Mittels eines derartigen Seilabweisers an der Bordscheibe wird vermieden, dass das Seil spiralförmig an der Bordscheibe aufsteigt und dann schlagartig auf die Wickelebene abfällt, und stattdessen sichergestellt, dass das Seil bei Erreichen der Bordscheibe sofort in die nächste Lage gelenkt wird. Der Seilabweiser ist dabei derart angeordnet, dass er das Seil am Ende der Trommelseilrille oder am Ende der Seillage wieder nach innen auf die nächste Seillage abweist, wobei sich die Stärke bzw. Dicke dieses Seilabweisers nach dem Seilablenkwinkel auf die Trommel richten kann, wobei bei kleinerem Ablenkwinkel ein stärkerer Seilabweiser als bei größeren Ablenkwinkeln vorgesehen ist. Je nach Ablenkwinkel kann die Stärke des genannten Seilabweisers im Bereich zwischen 5 % und 50% des Seildurchmessers liegen.

Der genannte mehrstufige Abweiserverlauf ist vorteilhafterweise derart ausgebildet, dass auf einen parallel verlaufenden Abweiserabschnitt ein keilförmig ansteigender Abweiserabschnitt und auf diesen wiederum ein parallel verlaufender Abweiserabschnitt jeweils unmittelbar oder mittelbar unter Zwischenschaltung anderer Abweiserabschnitte und/oder Aussparungen folgt. Insbesondere kann in Weiterbildung der Erfindung an der jeweiligen Bordscheibe ein Seilabweiser mit über den Umfang betrachtet drei Abschnitten vorgesehen sein, von denen ein erster Abschnitt eine Parallelflanke parallel zu der senkrecht auf die Trommelachse stehenden Rotationsebene, ein mittlerer Abschnitt eine keilförmig ansteigende Keilflanke und ein letzter Abschnitt wiederum eine Parallelflanke aufweist.

In alternativer Weiterbildung der Erfindung kann auch ein nur zweistufiger Abweiserverlauf vorgesehen sein, insbesondere derart, dass der Seilabweiser zusätzlich zu dem genannten keilförmig geneigten Abweiserabschnitt einen weiteren Abweiserabschnitt mit einer Parallelflanke besitzt, die sich im Wesentlichen parallel zu der senkrecht auf die Trommelachse stehenden Rotationsebene erstreckt, wobei die genannte Parallelflanke radial innerhalb oder radial außerhalb an die genannte Keilflanke anschließen kann. In bevorzugter Weiterbildung der Erfindung ist hierbei die genannte Pärallelflanke an der Bordscheibe radial innerhalb der Keilflanke vorgesehen, so dass das an die Bordscheibe anlaufende Seil zunächst an der Parallelflanke aufläuft und sodann erst bei Erreichen der Keilflanke von dieser zurück nach innen abgewiesen wird. Bei einem solchen zweistufigen Abweiserverlauf können sich die genannte Parallelflanke und die genannte Keilflanke größenordnungsmäßig über jeweils etwa 40 % bis 60 % der Bordscheibenhöhe erstrecken.

Nach einer weiteren alternativen Ausbildung der Erfindung kann die Bordscheibe auch einen im Wesentlichen nur einstufigen Abweiserverlauf besitzen, wobei bei einer solchen einstufigen Ausbildung vorteilhafterweise eine Keilflanke vorgesehen ist, die sich im Wesentlichen über die gesamte Bordscheibenhöhe erstreckt.

Je nach Konfiguration des Abweiserverlaufs kann die genannte Keilflanke unterschiedliche Steigungswinkel einnehmen. Ein für verschiedene Konfigurationen vorteilhaft arbeitender Keilflankenwinkel kann in Weiterbildung der Erfindung im Bereich von 2° bis 6°, vorzugsweise etwa 2° bis 4° liegen.

Die genannten Parallel- und Keilflanken bzw. -abschnitte können sich über unterschiedlich große Bordscheibenabschnitte erstrecken. Nach einer vorteilhaften Ausführung der Erfindung mit einem mehrstufigen Abweiserverlauf der vorgenannten Art kann das Seil, wenn es an der Bordscheibe anläuft, in einer ersten Stufe über ca. 30 % bis 60 % des Bordscheibenradius parallel nach außen laufen, während im weiteren Verlauf zwischen ca. 60 % bis 80 % des Radius eine ringsum verlaufende Keilfläche das Seil nach innen abweist, die vorteilhafterweise flach ansteigt bis auf eine Dicke von ca. 5 % bis 50 % des Seildurchmessers. Nach dieser nach innen stehenden Keilringfläche, die ggf. auch am Umfang spiralförmig ausgebildet sein kann, kommt sodann ein weiterer parallel verlaufender Bereich. Vorteilhafterweise sind alle Übergänge zwischen den verschiedenen Abschnitten des Seilabweisers kerbfrei abgerundet.

Um auch am Anlenkpunkt des Seils an der Seiltrommel den Seilverschleiß gering zu halten, ist in Weiterbildung der Erfindung auf ein Festklemmen des Seils am Anschlagpunkt verzichtet und stattdessen ein schlaufenförmiges Anschlagen des Seils vorgesehen. Insbesondere kann ein Seil-Endbefestigungsmittel an der Seiltrommel einen pollerartigen Einhänger beispielsweise in Form eines Zapfens, einer Schraube oder einer Rohrhülse umfassen, woran eine am Seilende vorgesehene Seilendschlaufe eingehängt werden kann. Die genannte Seilendschlaufe kann vorteilhafterweise in das Seil eingespleißt sein und/oder durch Spleißung gebildet werden.

Die Erfindung wird nachfolgend anhand eines bevorzugten Ausführungsbeispiels und zugehöriger Zeichnungen näher erläutert. In den Zeichnungen zeigen:
- Fig. 1:: eine schematische, perspektivische Darstellung einer Seiltrommel nach einer vorteilhaften Ausführung der Erfindung, die die Berillung des Trommelmantels, die an der Innenseite der Bordscheiben vorgesehenen Seilabweiserflanken und die Seilendbefestigung mittels einer Seilendschlaufe zeigt,
- Fig. 2:: eine schematische, perspektivische Darstellung der Seiltrommel aus einer anderen Blickrichtung, die die Berillung des Trommelmantels und die Durchführung des Seilendes durch die Bordscheibe zeigt,

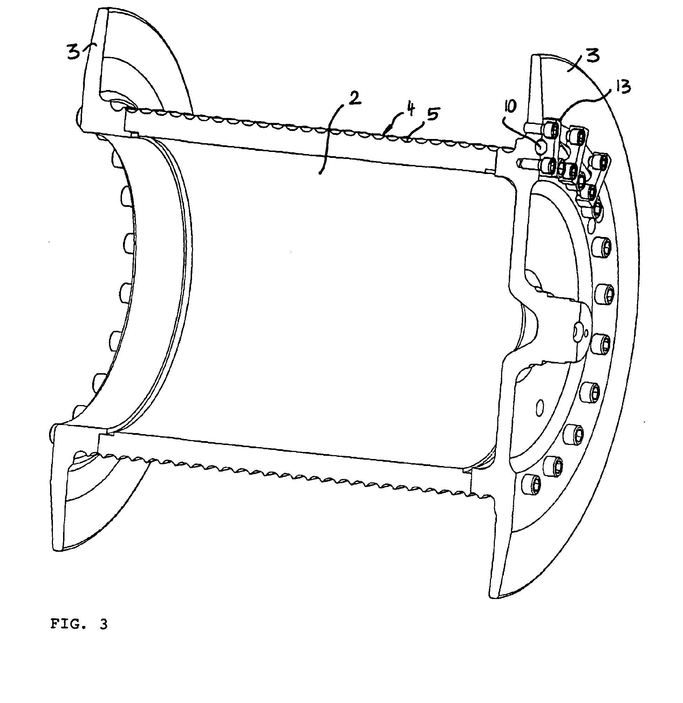

- Fig. 3:: eine schematische, perspektivische Darstellung der Seiltrommel aus den vorhergehenden Figuren in einer Schnittansicht, die den Übergangsbereich zwischen Trommelmantelkorpus und den endseitig daran angrenzenden Bordscheiben zeigt,

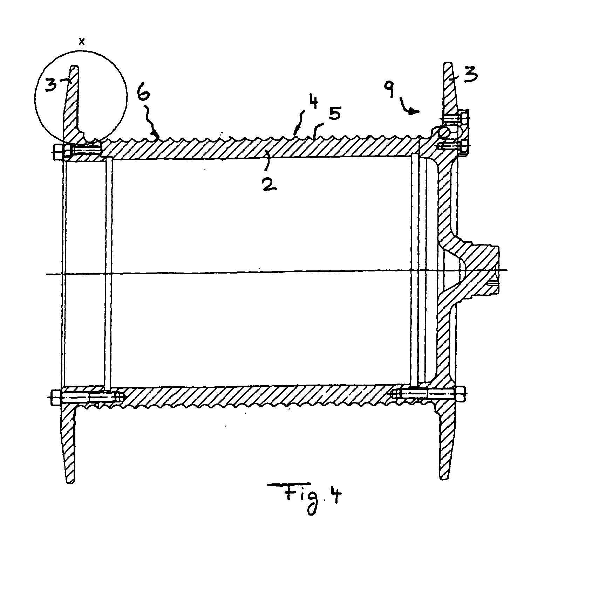

- Fig. 4:: einen Längsschnitt durch die Seiltrommel aus den vorhergehenden Figuren, der die Verbindung der Bordscheiben mit dem Trommelmantelkorpus und dem dort vorgesehenen Übergangsbereich zwischen Mantelberillung und Seilabweiser an den Bordscheiben zeigt,
- Fig. 5:: eine ausschnittsweise, vergrößerte Schnittansicht der Trommelberillung,
- Fig. 6:: eine ausschnittsweise, vergrößerte Schnittansicht des Übergangsbereichs zwischen Trommelmantelkorpus und Bordscheibe, die den an der Bordscheibe vorgesehenen Seilabweiser in einem anderen Bereich zeigt, und
- Fig. 7:: eine schematische Schnittansicht einer Seilrolle nach einer vorteilhaften Ausführung der Erfindung, die die ovalisierte Rillenkonturierung zeigt.

Die in den Figuren gezeigte Seiltrommel 1 umfasst einen grob gesprochen zylindrischen Trommelmantelkorpus 2, an dessen axialen Enden jeweils eine Bordscheibe 3 angeschlossen ist, die sich grob gesprochen senkrecht zur Trommellängsachse erstrecken und von der Trommelmantelfläche radial nach außen vorspringen und einen deutlich größeren Durchmesser als der Trommelmantel besitzen.

Die gezeigte Seiltrommel 1 kann hierbei insbesondere in dem Hubwerk eines Krans wie beispielsweise einem Turmdrehkran oder einem mobilen Teleskopkran oder einem Auslegermastverstellwerk, aber auch in anderen Seilwinden Verwendung finden.

Die genannten Bordscheiben 3 können mit dem Trommelmantelkorpus 2 grundsätzlich in verschiedener Art und Weise verbunden sein. Beispielsweise wäre eine einstückige Fertigung denkbar, wobei vorteilhafterweise jedoch die Bordscheiben 3 nachträglich an den Trommelmantelkorpus 2 gefügt sein können. In der gezeichneten Ausführung sind die Bordscheiben 3 stirnseitig auf den Trommelmantelkorpus 2 aufgesetzt und durch Befestigungsmittel in Form von Schraubbolzen befestigt.

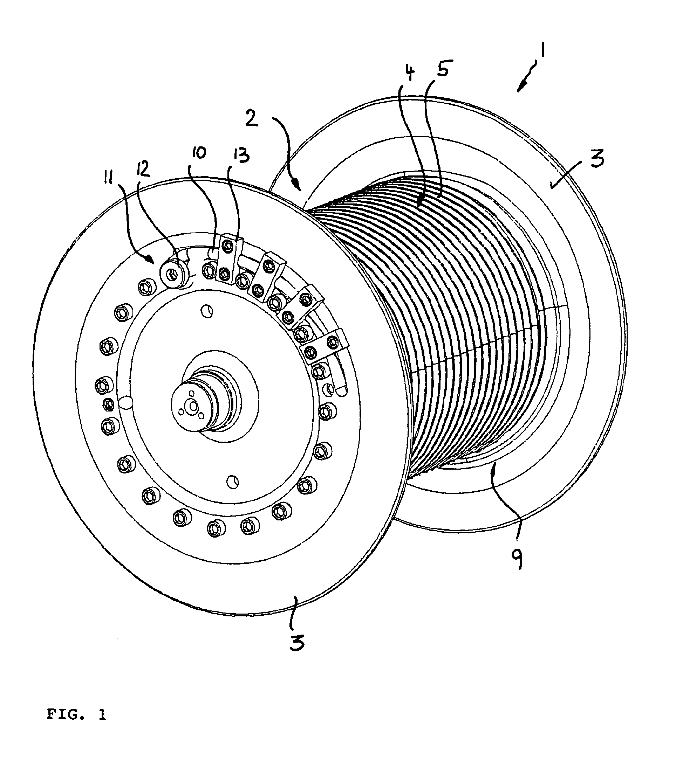

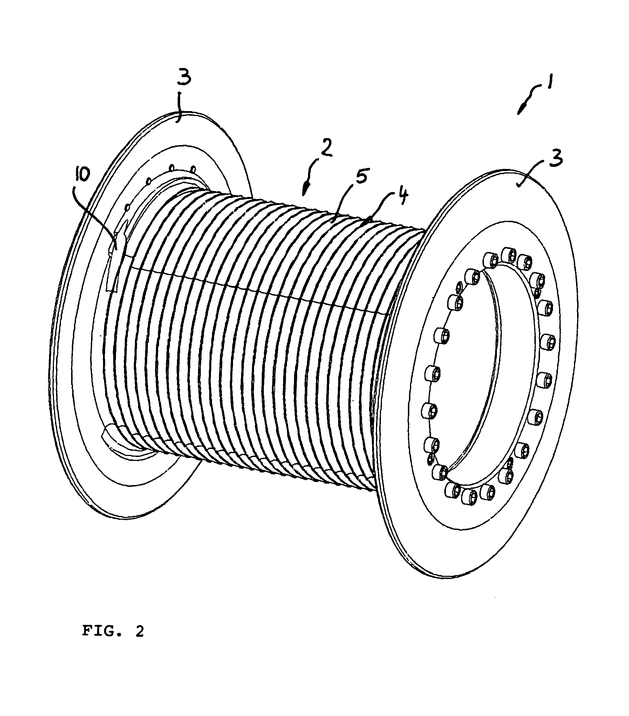

Der Trommelmantelkorpus 2 ist mit einer Berillung 4 versehen, deren Seilrillen 5 sich über den gesamten Trommelmantelkorpus 2 erstrecken, vgl. Figuren 1 und 2. Die genannte Berillung 4 kann hierbei vorteilhafterweise in der gezeichneten Ausführungsform nur einen Kreuzungs- bzw. Steigungsbereich besitzen, in dem die Seilrillen 5 eine Rillensteigung von etwa einem vollen Seildurchmesser aufweisen. In dem restlichen Umfangsbereich verlaufen die Seilrillen 5 im Wesentlichen parallel zu einer jeweils senkrecht auf die Trommellängsachse stehenden Ebene, so dass die Berillung 4 insgesamt nur einen Seilkreuzungsbereich und nur einen Parallelbereich aufweist.

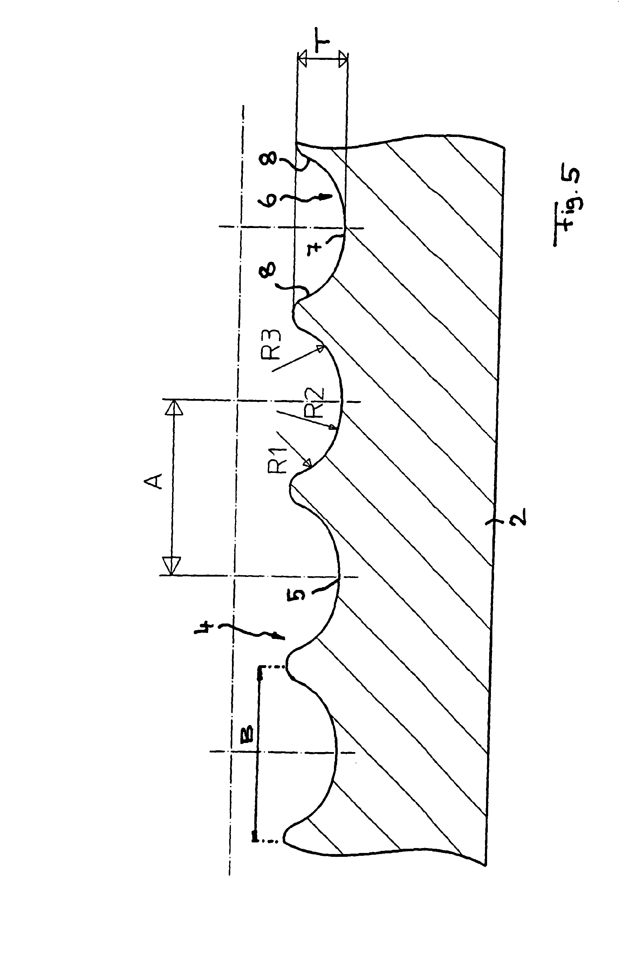

Wie am besten in Fig. 5 zu sehen, besitzen die Seilrillen 5 im Querschnitt betrachtet eine von der Kreisform abweichende, flachgedrückte, insbesondere näherungsweise ovale bzw. ovalisierte Rillenkontur 6. Die näherungsweise an ein Oval bzw. ein Ovalsegment angelehnte Rillenkontur 6 umfasst hierbei im Bereich des Rillenbodens 7 eine Abflachung bzw. einen Bereich mit einem deutlich größeren Krümmungsradius R2, während im Bereich der rechts und links angrenzenden Rillenflanken 8 ein deutlich kleinerer Krümmungsradius R1 bzw. R3 vorgesehen ist, wie dies bei ovalen oder elliptischen Konturen bekannt ist. In der gezeichneten Ausführungsform beträgt das Verhältnis von Rillenbreite B zu Rillentiefe T etwa 5, wobei dieses Breite zu Tiefe-Verhältnis in Abhängigkeit der Querverformungseigenschaften des Faserseils anders gewählt sein kann, beispielsweise im Bereich von 3-7, vorzugsweise 4-6, um eine bestmögliche Anpassung an den sich unter Querdruck auf der Seiltrommel verformenden Seilquerschnitt zu erzielen.

Der Teilungs- bzw. Rillenabstand der Berillung 4 ist in Fig. 5 mit A bezeichnet und ebenfalls an den flachgedrückten, ovalisierten Seilquerschnitt angepasst, der sich unter Querdruck auf das Seil einstellt. Vorteilhafterweise beträgt der besagte Rillenabstand A etwa 104% bis 111%, vorzugsweise etwa 106% bis 110 %, besonders bevorzugt 108% des Seildurchmessers, wenn der genannte Seildurchmesser in idealisierter Weise bei reiner Zuglast kreisrund angenommen wird.

Um die Reibung zwischen Seil und Trommeloberfläche zu reduzieren, die sich auch bei idealem Aufspulen aufgrund der Seildehnung ergibt, sind die das Seil berührenden Oberflächen insbesondere im Bereich der Berillung 4 und der Innenflächen der Bordscheiben 3 geschliffen, poliert oder in anderer Weise feinstbearbeitet ausgebildet, um einen sehr kleinen Reibungsbeiwert und/oder sehr kleine mittlere Rautiefen zu erreichen. Eine solche Oberflächenfeinbearbeitung kann insbesondere dann sinnvoll sein, wenn die Seiltrommel aus Stahl oder einem anderen metallischen Werkstoff gefertigt ist, kann jedoch auch bei anderen Materialwahlen für die Seiltrommel vorgesehen sein.

Alternativ oder zusätzlich kann die seilberührende Oberfläche der Seiltrommel 1, insbesondere im Bereich der Berillung 4 oder im Bereich der Innenseiten der Bordscheiben 3 mit einer reibungsreduzierenden und/oder steifigkeitsreduzierenden Oberflächenbeschichtung versehen sein, beispielsweise in Form einer aufvulkanisierten Kunststoffbeschichtung oder einem mit Kohlenstoff aditivierten Kunststoff, die vorteilhafterweise nicht nur reibungsvermindernd, sondern auch dämpfend ausgebildet ist, um Stöße auf das Seil und/oder lokalen Flächenpressungsspitzen zu dämpfen bzw. zu reduzieren. Vorteilhafterweise kann hierbei eine mehrschichtige bzw. mehrlagige Oberflächenbeschichtung vorgesehen sein, bei der unter der an der Oberfläche liegenden reibungsreduzierenden Beschichtung eine dämpfende Beschichtung aus einem weichen, gummielastischen oder anders verformbaren Werkstoff aufgebracht ist. Alternativ oder zusätzlich kann der festigkeitsgebende Korpus bzw. Korpusteil der Seiltrommel auch ganz aus Kunststoff gefertigt sein, beispielsweise einem faserverstärkten Kunststoff wie CFK oder GFK. Wie oben erwähnt, können auch andere Verbundkonstruktionen vorgesehen sein.

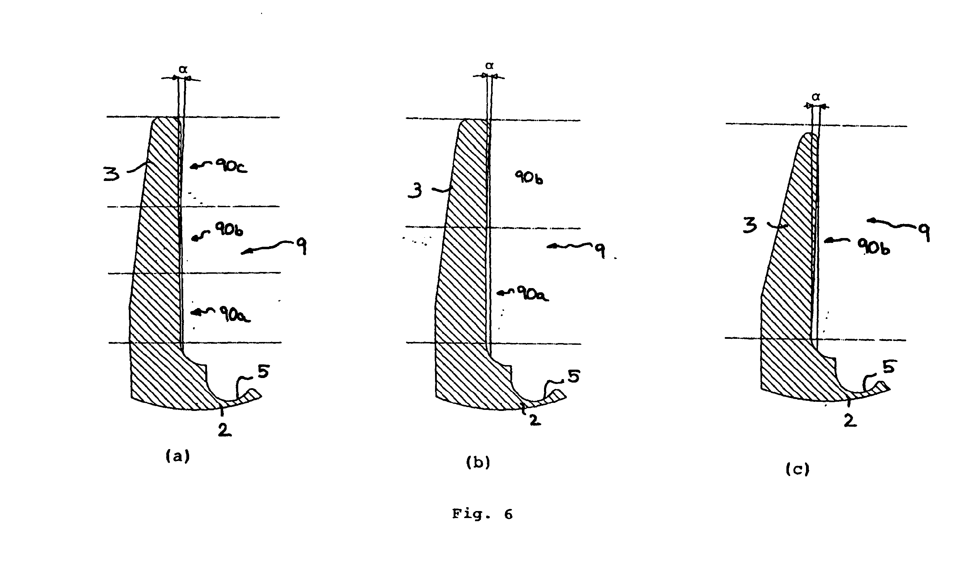

Um den Verschleiß auch beim Seillagenwechsel, wenn das Seil durch die Bordscheiben 3 umgelenkt wird, zu verringern, sind an den Bordscheiben 3 innenseitig Seilabweiser 9 vorgesehen, die vorteilhafterweise einen Abweiserverlauf über mehrere Stufen besitzen. Am Ende der Mantelrille bzw. am Ende der Seillage umfasst der genannte Seilabweiser 9 eine an der Innenseite der entsprechenden Bordscheibe 3 vorgesehene Abweiserflanke, die zunächst in einem ersten Abweiserabschnitt 90a parallel zur Rotationsebene, die senkrecht auf die Trommellängsachse steht, verläuft und sich beispielsweise über ca. 30 % bis 60 % des Trommelradius erstrecken kann. In einem zweiten Abweiserabschnitt 90b geht die genannte Abweiserflanke dann in eine Keilfläche über, die das daran anlaufende Seil nach innen drückt. Nach dieser nach innen stehenden Keilringfläche kommt ein weiterer Abweiserabschnitt 90c, in dem die genannte Abweiserflanke vorteilhafterweise wiederum parallel zu der genannten Rotationsebene senkrecht auf die Trommellängsachse verlaufen kann. Die genannte Keilflanke des mittleren Abweiserabschnitts 90b kann sich unter einem Neigungswinkel α von einigen, wenigen Grad, vorzugsweise etwa 2° bis 6° nach innen geneigt erstrecken, vgl. Fig. 6, und dabei einen Bereich von etwa 60% bis 80% des Scheibenradius einnehmen.

Alternativ zu der beschriebenen, in der Teilansicht (a) der Fig. 6 gezeigten Ausführung kann der genannte Seilabweiser 9 auch einen nur zweistufigen Abweiserverlauf besitzen, wie ihn die Teilansicht (b) der Fig. 6 zeigt. Insbesondere kann die Abweiserflanke einen inneren Abweiserabschnitt 90a aufweisen, in dem die Abweiserflanke sich parallel zu der Rotationsebene senkrecht auf die Trommellängsachse erstreckt. Der genannte innere Abweiserabschnitt 90a kann hierbei ungefähr die halbe Höhe der Bordscheibe 3 einnehmen. Radial außerhalb daran anschließend kann ein weiterer Abweiserabschnitt 90b vorgesehen sein, in dem die Abweiserflanke eine Keilfläche bildet, die in der vorgenannten Weise unter dem Winkel α geneigt ist, vgl. Fig. 6, Teilansicht (b). Die genannte Keilflanke im Abschnitt 90b kann sich über die äußere Hälfte der Bordscheibenhöhe erstrecken.

Wie die Teilansicht (c) der Fig. 6 zeigt, kann der Seilabweiser 9 im Wesentlichen auch nur einen Abweiserabschnitt 90b aufweisen, der in dieserm Fall vorteilhafterweise als Keilflanke ausgebildet ist, die unter dem Winkel α nach innen verkippt ist, um das daran anlaufende Seil nach innen zurückzudrücken. In der Ausbildungsform nach Fig. 6 (c) erstreckt sich die Keilflanke im Wesentlichen über die gesamte Höhe der Bordscheibe 3.

Die Befestigung des Seilendes an der Seiltrommel 1 ist Fig. 1 zu entnehmen. Das Seil 10 wird im Seileinlaufbereich, den Fig. 2 zeigt, durch eine Seildurchführung in Form einer Ausnehmung in der Bordscheibe 3 durch die genannten Bordscheibe 3 hindurch auf deren Außenseite geführt. Auf der Außenseite der genannten Bordscheibe 3 ist das Seil 10 an einem pollerartigen Seilendbefestigungsmittel 11 angeschlagen bzw. eingehängt. Das Seil 10 besitzt hierzu eine vorteilhafterweise durch Spleißen gebildete Seilendschlaufe, die über den pollerförmigen Seileinhänger 12 eingehängt ist. Zwischen dem Seilendbefestigungspunkt, der durch den genannten pollerförmigen Seileinhänger 12 definiert ist, und der vorgenannten Durchführung durch die Bordscheibe 3 kann das Seil 10 durch Seilführungsmittel 13 geführt sein, vgl. Fig. 1, die sich auf der Außenseite der Bordscheibe 3 befinden. Auf dem genannten pollerförmigen Seileinhänger 12 kann die Seilschlaufe durch eine im Durchmesser an die Seilschlaufe angepasste Scheibe gesichert sein, die beispielweise mittels einer Distanzhülse auf der Außenseite der Bordscheibe 3 gesichert ist, so dass zwischen der Bordscheibe und der genannten Sicherungsscheibe ein ausreichend großer Abstand vorgesehen ist, um eine Quetschung bzw. Klemmung des Seils 10 im Bereich der Seilschlaufe zu vermeiden.

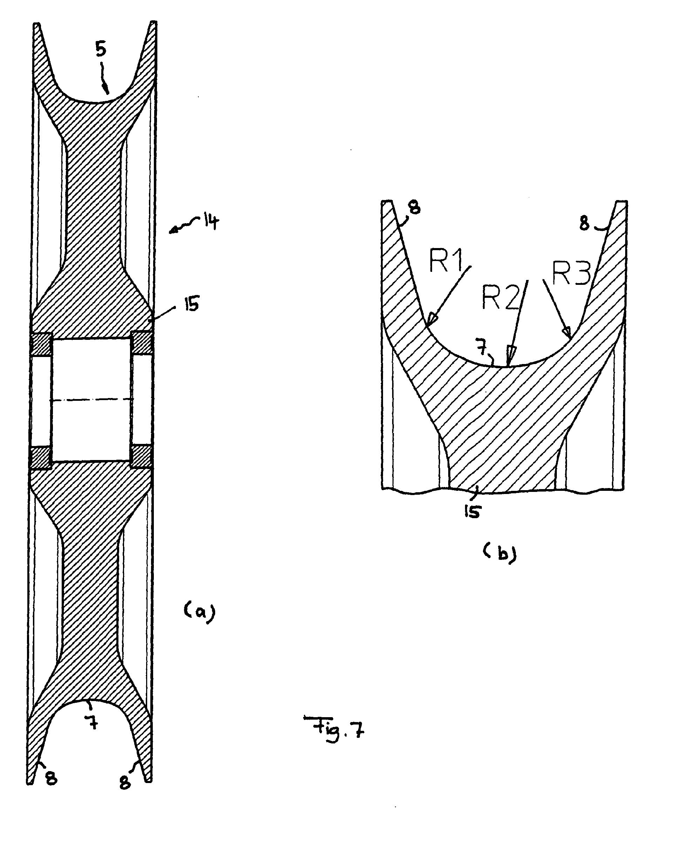

Fig. 7 zeigt eine Seilrolle 14, die einen trommel- bzw. scheibenförmigen Rollenkorpus 15 umfasst, der in an sich bekannter Weise drehbar gelagert ist und beispielsweise am Ausleger eines Krans befestigt sein kann. Der genannte Rollenkorpus 15 umfasst auf seiner Außenmantelfläche eine Seilrille 5, die analog zu den Seilrillen 5 der Seiltrommel 1 eine ovalisierte Rillenkontur besitzt. Diesbezüglich darf auf die vorangehende Beschreibung verwiesen werden. Vorteilhafterweise ist der Rillenkorpus 15 mit seiner seilberührenden Oberfläche, insbesondere im Bereich der Seilrille 5 analog zu der Seiltrommel 1 poliert, geschliffen oder in sonstiger Weise feinbearbeitet, um eine reibungsreduzierende Oberfläche zu erhalten. Alternativ oder zusätzlich kann die genannte seilberührende Oberfläche der Seilrolle 14 mit einer reibungsreduzierenden und/oder dämpfenden Oberflächenbeschichtung versehen sein. Auch diesbezüglich darf auf die vorangehende Beschreibung verwiesen werden.

Wie die ausschnittsweise Teilansicht (b) der Fig. 7 zeigt, besitzt auch die Seilrolle 14 vorteilhafterweise eine Seilrille 5, deren ovalisierte Rillenkontur im Bereich des Rillenbodens 7 einen größeren Krümmungsradius R2 als in den daran angrenzenden seitlichen Flankenabschnitten besitzt, in denen der Krümmungsradius R1 bzw. R3 kleiner wird, vgl. Fig. 7 (b).

## Patentansprüche

1. Seiltrommel für eine Seilwinde eines Faserseiltriebs, mit einem Trommelmantelkorpus (2), der umfangsseitig mit einer Rillung (4) versehen ist, sowie zwei endseitig an den Trommelmantelkorpus (2) angrenzenden Bordscheiben (3), **dadurch gekennzeichnet, dass** die zumindest eine Seilrille (5) der Rillung (4) im Querschnitt betrachtet eine von der Kreisform abweichende, flachgedrückte, runde Rillenkontur (6) besitzt, die an den Seilquerschnitt unter Zug- und Querbelastung auf der Seiltrommel angepasst ist und am Rillenboden (7) einen größeren Krümmungsradius als an den angrenzenden Rillenflanken (8) besitzt.

2. Seiltrommel nach dem vorhergehenden Anspruch, wobei die Rillenkontur (6) ovalisiert und/oder elliptisch geformt ist.

3. Seiltrommel nach Anspruch 1, wobei die Rillenkontur (6) am Rillenboden (7) eine Abflachung und/oder polygonartige Abknickungen mit zueinander flachwinklig geneigten Flächenstücken und vorzugsweise gerundeten Übergängen besitzt.

4. Seiltrommel nach einem der vorhergehenden Ansprüche, wobei das Verhältnis von Rillenbreite B zu Rillentiefe T im Bereich von 3-7, vorzugsweise 4-6, insbesondere etwa 5 gewählt ist.

5. Seiltrommel nach einem der vorhergehenden Ansprüche, wobei der Teilungsabstand A der Rillung (4) etwa 104 % bis 111 %, vorzugsweise etwa 106 % bis 110 % des mittleren Seildurchmessers, wenn dieser Seildurchmesser bei kreisrundem, unverformtem Seilquerschnitt gemessen wird, beträgt.

6. Seiltrommel nach einem der vorhergehenden Ansprüche, wobei die Rillung (4) und/oder die von dem Seil (10) berührten Teile der Seiltrommel (1) eine feinst bearbeitete, vorzugsweise geschliffene oder polierte, Oberfläche mit einer mittlere Rautiefe Ra von ≤ 1 µm, vorzugsweise ≤ 0,25 µm aufweist.

7. Seiltrommel nach einem der vorhergehenden Ansprüche, wobei die Rillung (4) und/oder die vom Seil berührten Teile der Seiltrommel (1) mit einer reibungsreduzierenden und/oder dämpfenden Oberflächenbeschichtung vorzugsweise aus Kunststoff versehen ist.

8. Seiltrommel nach dem vorhergehenden Anspruch, wobei die Oberflächenbeschichtung mehrlagig ausgebildet ist, wobei eine oberste Beschichtungslage reibungsreduzierend ausgebildet ist und eine mittelbar oder unmittelbar darunter liegende Beschichtungslage dämpfend ausgebildet ist.

9. Seiltrommel nach einem der vorhergehenden Ansprüche, wobei die Rillung (4) über den Umfang des Trommelmantelkorpus (2) betrachtet nur einen Steigungsbereich, in dem die Seilrillen (5) um im Wesentlichen einen Seildurchmesser versetzen, und nur einen Parallelbereich umfasst.

10. Seiltrommel nach einem der vorhergehenden Ansprüche, wobei an zumindest einer der Bordscheiben (3) ein Seilabweiser (9) vorgesehen ist, der über die Höhe der Bordscheibe betrachtet zumindest einen Abweiserabschnitt, der eine Keilflanke aufweist, besitzt.

11. Seiltrommel nach dem vorhergehenden Anspruch, wobei der Seilabweiser (9) radial innerhalb und/oder radial außerhalb des genannten Abweiserabschnitts mit der Keilflanke einen weiteren Abweiserabschnitt aufweist, der eine an die genannte Keilflanke anschließende Parallelflanke besitzt.

12. Seiltrommel nach dem Oberbegriff des Anspruchs 1 oder einem der vorhergehenden Ansprüche, wobei ein Seilendbefestigungsmittel (11) zum Anschlagen des Seils (10) an der Seiltrommel (1) einen pollerartigen Seileinhänger (12) umfasst, an dem eine vorzugsweise eingespleißte Seilendschlaufe einhängbar ist.

13. Seilrolle für einen Faserseiltrieb, mit einem drehbar gelagerten Rollenkorpus (15), dessen Mantelfläche zumindest eine Seilrille (5) aufweist, **dadurch gekennzeichnet, dass** die Seilrille (5) im Querschnitt betrachtet eine von der Kreisform abweichende, flachgedrückte, runde Rillenkontur (6) besitzt, die as den Seilquerschnitt unter Zug- und Querbelastung auf der Seilrolle angepasst ist und im Bereich des Rillenbodens (7) einen größeren Krümmungsradius als im Bereich der Rillenflanken (8) besitzt.

14. Seiltrieb, wie Hubwerk oder dergleichen, mit einem Faserseil sowie mit zumindest einer Seiltrommel (1) nach einem der Ansprüche 1-12 und/oder mit zumindest einer Seilrolle (14) nach Anspruch 13.

## Claims

1. A hoist drum for a hoist winch of a fiber rope drive having a drum jacket body (2) which is provided at the circumferential side with a grooving (4) as well as having two guard plates (3) adjacent to the drum jacket body (2) at the end sides, **characterized in that** the at least one rope groove (5) of the grooving (4) has, viewed in cross-section, a flat-pressed round groove contour (6) which differs from the circular form and which is adapted to the rope cross-section under a tensile load and a transverse load on the hoist drum and has a larger radius of curvature at the groove base (7) than at the adjacent groove flanks (8).

2. A hoist drum in accordance with the preceding claim, wherein the groove contour (6) is ovalized and/or elliptical in shape.

3. A hoist drum in accordance with claim 1, wherein the groove contour (6) at the groove base (7) has a flattened portion and/or polygonal kinks with surface areas inclined at a flat angle to one another and preferably rounded transitions.

4. A hoist drum in accordance with one of the preceding claims, wherein the ratio of groove width B to groove depth T is selected in the range from 3 - 7, preferably 4 - 6, in particular around 5.

5. A hoist drum in accordance with one of the preceding claims, wherein the pitch spacing A of the grooving (4) amounts to around 104% to 111%, preferably around 106% to 110%, of the mean rope diameter when this rope diameter is measured with a circular, non-deformed rope cross-section.

6. A hoist drum in accordance with one of the preceding claims, wherein the grooving (4) and/or the parts of the hoist drum (1) contacted by the rope (10) has/have a very finely machined, preferably ground or polished, surface having a mean roughness depth Ra of ≤ 1 µm, preferably ≤ 0.25 µm.

7. A hoist drum in accordance with one of the preceding claims, wherein the grooving (4) and/or the parts of the hoist drum (1) contacted by the rope is/are provided with a friction-reducing and/or damping surface coating, preferably of plastic.

8. A hoist drum in accordance with the preceding claim, wherein the surface coating is configured in multiple layers, wherein a topmost coating layer is friction-reducing and a coating layer lying directly or indirectly thereunder is damping.

9. A hoist drum in accordance with one of the preceding claims, wherein the grooving (4), viewed over the circumference of the drum jacket body (2), only comprises one pitch region in which the rope grooves (5) are offset by substantially one rope diameter and only comprises one parallel region.

10. A hoist drum in accordance with one of the preceding claims, wherein a rope deflector (9) is provided at at least one of the guard plates (3) and has at least one deflector section, viewed over the height of the guard plate, which has a wedge flank.

11. A hoist drum in accordance with the preceding claim, wherein the rope deflector (9) has a further deflector section, which has a parallel flank adjoining the named wedge flank, radially inwardly and/or radially outwardly of the named deflector section with the wedge flank.

12. A hoist drum in accordance with the preamble of claim 1 or one of the preceding claims, wherein a rope end fastening means (11) for beating up the rope (10) to the hoist drum (1) comprises a bollard-like rope attachment (12) to which a preferably spliced rope end loop can be hung.

13. A rope pulley for a fiber rope drive having a rotatably supported roller body (15) whose jacket surface has at least one rope groove (5), **characterized in that** the rope groove (5), viewed in cross-section, has a flat-pressed round groove contour (6) which differs from the circular form and which is adapted to the rope cross-section under a tensile load and a transverse load on the hoist drum and which has a larger radius of curvature in the region of the groove base (7) than in the region of the groove flanks (8).

14. A rope drive, such as a lifting gear or the like, having a fiber rope as well as having at least one hoist drum (1) in accordance with one of the claims 1 - 12 and/or having at least one rope pulley (14) in accordance with claim 13.

## Revendications

1. Tambour à câble destiné à un treuil à câble d'un mécanisme à câbles en fibres, comprenant un corps d'enveloppe de tambour (2), qui est doté sur sa circonférence d'un rainurage (4), ainsi que deux anneaux d'épaulement (3) adjacents au corps d'enveloppe de tambour (2) à ses extrémités, **caractérisé en ce que** l'au moins une gorge (5) du rainurage (4) possède un contour de gorge (6) rond, aplati, différent d'une forme circulaire, vu en coupe transversale, qui est adapté à la section de câble lorsque ce dernier est sous charge de traction et charge transversale sur le tambour à câble, et qui possède au fond (7) de la gorge un rayon de courbure supérieur à celui aux flancs (8) adjacents de la gorge.

2. Tambour à câble selon la revendication précédente, dans lequel le contour de gorge (6) est formé de manière ovalisée et/ou elliptique.

3. Tambour à câble selon la revendication 1, dans lequel le contour de gorge (6) possède au fond (7) de la gorge un aplatissement et/ou des plis polygonaux avec des morceaux de surface inclinés à angles plats les uns par rapport aux autres et de préférence des transitions arrondies.

4. Tambour à câble selon l'une des revendications précédentes, dans lequel le rapport entre la largeur de gorge B et la profondeur de gorge T est choisi dans la plage de 3 à 7, de préférence de 4 à 6, en particulier d'environ 5.

5. Tambour à câble selon l'une des revendications précédentes, dans lequel la distance de pas A du rainurage (4) est d'environ 104 % à 111 %, de préférence environ 106 % à 110 % du diamètre moyen de câble, lorsque ce diamètre de câble est mesuré avec une section de câble circulaire non déformée.

6. Tambour à câble selon l'une des revendications précédentes, dans lequel le rainurage (4) et/ou les parties du tambour à câble (1) en contact avec le câble (10) comporte une surface très finement usinée, de préférence rectifiée ou polie, avec une rugosité moyenne Ra de ≤ 1 µm, de préférence ≤ 0,25 µm.

7. Tambour à câble selon l'une des revendications précédentes, dans lequel le rainurage (4) et/ou les parties du tambour à câble (1) en contact avec le câble sont pourvus d'un revêtement de surface réduisant les frottements et/ou amortisseur, de préférence en matière plastique.

8. Tambour à câble selon la revendication précédente, dans lequel le revêtement de surface est formé à couches multiples, une couche supérieure de revêtement étant formée de manière à réduire les frottements et une couche de revêtement située directement ou indirectement sous celle-ci étant formée de manière à amortir.

9. Tambour à câble selon l'une des revendications précédentes, dans lequel le rainurage (4), vu sur la circonférence du corps d'enveloppe de tambour (2), comprend uniquement une zone de pas, dans laquelle les gorges (5) se décalent essentiellement d'un diamètre de câble, et uniquement une zone parallèle.

10. Tambour à câble selon l'une des revendications précédentes, dans lequel sur au moins l'un des anneaux d'épaulement (3) se trouve un déflecteur de câble (9) qui possède, vu sur la hauteur de l'anneau d'épaulement, au moins une partie déflectrice, qui comporte un côté cunéiforme.

11. Tambour à câble selon la revendication précédente, dans lequel le déflecteur de câble (9) comporte radialement à l'intérieur et/ou radialement à l'extérieur de ladite partie déflectrice avec le côté cunéiforme une autre partie déflectrice qui possède un côté parallèle adjacent audit côté cunéiforme.

12. Tambour à câble selon le préambule de la revendication 1 ou l'une des revendications précédentes, dans lequel un moyen de fixation de bout de câble (11) comprend un élément d'accrochage de câble (12) de type bitte pour accrocher le câble (10) au tambour à câble (1), auquel une boucle de bout de câble de préférence épissée peut être accrochée.

13. Poulie destinée à un mécanisme à câbles en fibres, comprenant un corps de rouleau (15) monté rotatif, dont la surface d'enveloppe comporte au moins une gorge (5), **caractérisée en ce que** la gorge (5), vue en coupe transversale, possède un contour de gorge (6) rond et aplati, différent d'une forme circulaire, qui est adapté à la section de câble lorsque ce dernier est sous charge de traction et charge transversale sur la poulie, et qui possède dans la zone du fond (7) de la gorge un rayon de courbure supérieur à celui dans la zone des flancs (8) de la gorge.

14. Mécanisme à câbles, tel qu'un dispositif de levage ou similaire, comprenant un câble à fibres ainsi qu'au moins un tambour à câble (1) selon l'une des revendications 1 à 12, et/ou comprenant au moins une poulie (14) selon la revendication 13.
